# EUROPÄISCHE PATENTANMELDUNG

(11) **EP 1 195 411 A1**
(43) Veröffentlichungstag der Anmeldung: **10.04.2002**
(21) Anmeldenummer: 01122054.8
(22) Anmeldetag: 14.09.2001
(51) Int. Cl.: C09B 41/00, C09B 67/00, C09B 67/20

(54) **Verfahren zur Herstellung von Azofarbmitteln**

(30) Priorität: 05.10.2000 DE 10049200
(71) Anmelder: Clariant GmbH, 65929 Frankfurt am Main (DE)
(72) Erfinder: Dietz, Erwin, Dr., 61462 Königstein (DE); Weber, Joachim, Dr., 65929 Frankfurt am Main (DE); Schnaitmann, Dieter, Dr., 65817 Eppstein (DE); Wille, Christian, Dr., 69469 Weinheim (DE); Unverdorben, Leonhard, Dr., 61130 Nidderau (DE); Saitmacher, Klaus, Dr., 65830 Kriftel (DE); Jung, Jörg, Dr., 65439 Flörsheim (DE); Schiffer, Kristina, Dr., 61352 Bad Homburg v.d. Höhe (DE)
(74) Vertreter: Hütter, Klaus, Dr.

(57) **Zusammenfassung**

Gegenstand der Erfindung ist ein Verfahren zur Herstellung von Azofarbmitteln, dadurch gekennzeichnet, dass eine oder mehrere Kupplungskomponenten einzeln oder in Mischung und ein oder mehrere kupplungsfähige Diazoniumsalze einzeln oder in Mischung in Form ihrer Lösungen oder als Suspensionen in einem Mikrojetreaktor durch Düsen in einem von einem Gehäuse umschlossenen Reaktorraum auf einen gemeinsamen Kollisionspunkt gespritzt werden, wobei über eine Öffnung im Gehäuse in den Reaktorraum ein Gas oder eine verdampfende Flüssigkeit zur Aufrechterhaltung einer Gasatmosphäre im Reaktorraum eingeleitet wird, und die entstehende Lösung oder Suspension des Produkts und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

## Beschreibung

Die vorliegende Erfindung beschreibt ein umweltfreundliches und wirtschaftliches Verfahren zur Herstellung von Azofarbmitteln.

Im Rahmen der vorliegenden Erfindung sind mit Azofarbmitteln solche Azofarbstoffe und Azopigmente gemeint, die mittels der Azokupplungsreaktion aus einem Diazoniumsalz und einer CH-aciden Verbindung, im folgenden auch Kupplungskomponente genannt, hergestellt werden (Ullmann's Encyclopedia of Industrial Chemistry, Sixth Edition, "Azo Dyes" und "Azo Pigments"; und DIN 55943). Technisch werden sie konventionell im Batch-Verfahren hergestellt. Es sind auch kontinuierliche Misch-Verfahren in Mischdüsen und Durchflußreaktoren beschrieben (beispielsweise in EP-A-0 244 686).

Ein gemeinsames Merkmal dieser Verfahren ist die Notwendigkeit der genauen Kontrolle und Einhaltens der Verfahrensparameter: beispielsweise sind Temperatur, Zeit, Durchmischung und Farbmittelkonzentration, beispielsweise bei Azopigmenten die Suspensionskonzentration, entscheidend für die Ausbeute, die coloristischen Eigenschaften und die Echtheiten der erhaltenen Azofarbmittel sowie deren Qualitätskonstanz. Auch ist der scale-up von neuen Produkten vom Labormaßstab in den großtechnischen Maßstab bei Batch-Verfahren aufwendig und kann Schwierigkeiten bereiten, da beispielsweise Kessel- und Rührergeometrien oder Wärmeübergänge großen Einfluss auf Korngröße, Korngrößenverteilung von Azopigmenten und auf die coloristische Eigenschaften haben.

Der vorliegenden Erfindung lag die Aufgabe zugrunde, ein umweltfreundliches, wirtschaftliches, technisch zuverlässiges und kostengünstiges Verfahren zur Herstellung von Azofarbmitteln durch die Azokupplungsreaktion zu finden, das sich universell für die Herstellung sowohl von Azopigmenten als auch von Azofarbstoffen eignet, bei dem eine optimale Durchmischung der Reaktanden gegeben ist, das gegebenenfalls mit den bei der Herstellung von Azofarbmitteln bekannten Maßnahmen, wie Einsatz von Lösemitteln oder Hilfsmitteln, kombiniert werden kann, bei dem die gewünschten Verfahrensparameter möglichst konstant eingehalten werden können und der scale-up einfach zu bewerkstelligen ist.

Es ist bekannt, bestimmte chemische Umsetzungen in Mikroreaktoren durchzuführen (beispielsweise DE-A-3 926 466). Mikroreaktoren sind beispielsweise aus Stapeln von strukturierten Platten mit Mikrokanälen aufgebaut und in der DE 39 26 466 C2 und US-A-5,534,328 beschrieben. In der US-A-5,811,062 wird darauf hingewiesen, dass Mikroreaktoren vorzugsweise für Reaktionen benutzt werden, die keine Feststoffe benötigen oder produzieren, da die Mikrokanäle sehr leicht verstopfen.

Es wurde nun gefunden, dass die erfindungsgemäße Aufgabe überraschenderweise durch den Einsatz eines Mikrojetreaktors gelöst werden kann.

Gegenstand der vorliegenden Erfindung ist ein Verfahren zur Herstellung von Azofarbmitteln, dadurch gekennzeichnet, dass die Reaktanden, das sind die Kupplungskomponente und das Diazoniumsalz, in Form ihrer Lösung oder als Suspension in einem Mikrojetreaktor zweckmäßigerweise über eine oder mehrere Pumpen, vorzugsweise Hochdruckpumpen, durch Düsen in einem von einem Gehäuse umschlossenen Reaktorraum auf einen gemeinsamen Kollisionspunkt gespritzt werden, wobei über eine Öffnung im Gehäuse in den Reaktorraum ein Gas oder eine verdampfende Flüssigkeit zur Aufrechterhaltung einer Gasatmosphäre im Reaktorraum, insbesondere im Kollisionspunkt der Strahlen, gegebenenfalls auch zur Kühlung, eingeleitet wird und die entstehende Lösung oder Suspension des Produkts und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

Für die erfindungsgemäße Herstellung von Azofarbmitteln ist eine intensive, schnelle, gleichmäßige und reproduzierbare Durchmischung der Reaktanden erforderlich. Dies wird dadurch erreicht, dass die eingesetzten Reaktanden unter einem Druck von mindestens 10 bar, bevorzugt mindestens 50 bar, insbesondere von 50 bis 5000 bar, in den Reaktorraum gespritzt werden.

Um Materialverschleiß an den inneren Oberflächen des Gehäuses zu vermeiden, wird der Kollisionspunkt in den materialfernen Gasraum verlegt. Unter "materialfern" wird dabei verstanden, dass in der Umgebung des Kollisionspunkts der Strahlen durch das eingeleitete Gas oder verdampfende Flüssigkeit eine Gasatmosphäre aufrechterhalten wird. Dies bedeutet, dass der Kollisionspunkt, in dem die Strahlen aufeinandertreffen, nicht an einer Gefäßwand oder einer Rohrwand anliegt. Dadurch wird Materialverschleiß verhindert, der dort auftreten würde, wo Kavitation an Materialwänden stattfindet. Zu Kavitation kommt es besonders bei Einsatz von hohen Drücken, insbesondere bei Drücken über 3000 bar. Des weiteren werden die kollidierenden Strahlen durch die Gasatmosphäre vor ihrem Zusammenprall nicht abgebremst, wie es beispielsweise der Fall wäre, wenn sie durch eine Flüssigkeit passieren müssten.

Das Material der Düsen soll möglichst hart und dadurch verschleißarm sein, es kommen beispielsweise Keramiken, wie Oxide, Carbide, Nitride oder Mischverbindungen daraus in Betracht, wobei vorzugsweise Aluminiumoxid, insbesondere als Saphir oder Rubin, eingesetzt wird, aber auch Diamant besonders geeignet ist. Es kommen als Hartstoffe auch Metalle, insbesondere gehärtete Metalle, in Betracht. Die Bohrungen der Düsen haben Durchmesser von kleiner als 2 mm, vorzugsweise kleiner 0,5 mm und insbesondere kleiner als 0,4 mm.

Der Mikrojetreaktor kann prinzipiell als Zwei-, Drei- oder Mehrstrahlreaktor ausgeführt werden, bevorzugt ist die Zweistrahl-Ausführung. Bei einer Anordnung mit zwei Strahlen treffen die Strahlen bevorzugt frontal (Winkel zwischen den Strahlen 180°) aufeinander, bei einer Dreistrahl-Anordnung ist ein Winkel von 120° zwischen den Strahlen zweckmäßig. Günstigerweise können die Düsen in einer auf den gemeinsamen Kollisionspunkt justierbaren Vorrichtung gelagert sein. Durch diese unterschiedlichen Ausführungsformen können beispielsweise für die Reaktion erforderliche, unterschiedliche Volumenverhältnisse der Lösungen oder Suspensionen der Kupplungskomponente und des Diazoniumsalzes realisiert werden.

In einer besonders bevorzugten Ausführungsform des erfindungsgemäßen Verfahrens werden die Lösung oder die Suspension der Kupplungskomponente und die Lösung oder Suspension des Diazoniumsalzes mittels zweier Hochdruckpumpen durch zwei sich gegenüberstehende Düsen frontal aufeinander gespritzt. Eine weitere besonders bevorzugte Ausführungsform des erfindungsgemäßen Verfahrens ist ein Dreistrahlreaktor, bei dem beispielsweise mittels einer Hochdruckpumpe die Lösung oder Suspension des Diazoniumsalzes durch eine Düse und mittels einer zweiten Hochdruckpumpe die Lösung oder die Suspension der Kupplungskomponente durch zwei Düsen auf den gemeinsamen Kollisionspunkt gespritzt werden.

In einer weiteren bevorzugten Ausführungsform wird die Lösung oder Suspension des Diazoniumsalzes durch 1, 2 oder mehrere Düsen, bevorzugt durch eine Düse, und unabhängig davon die Lösung oder Suspension der Kupplungskomponente durch 1, 2 oder mehrere Düsen, bevorzugt durch 1, 2 oder 3 Düsen, auf einen gemeinsamen Kollisionspunkt gespritzt.

Die Düse der Lösung oder Suspension des Diazoniumsalzes und die der Lösung oder Suspension der Kupplungskomponente können unterschiedliche Durchmesser haben. Zweckmäßigerweise hat die Düse, durch die das Diazoniumsalz gespritzt wird, den 0,2-fachen bis 5-fachen, bevorzugt den 0,3-fachen bis 3-fachen, Durchmesser im Vergleich zu der Düse, durch die die Kupplungskomponente gespritzt wird.

Die Temperaturen der Reaktanden betragen normalerweise von -10 bis +90°C, bevorzugt von -5 bis +80°C, insbesondere-von-0 bis 70°C. Es kann auch über dem Siedepunkt des flüssigen Mediums unter Druck gearbeitet werden.

Falls erforderlich, kann mit dem eingeleiteten Gas oder der verdampfenden Flüssigkeit, die für die Aufrechterhaltung der Gasatmosphäre im Gehäuseinneren verwendet wird, gekühlt werden. Es kann auch über eine zusätzliche Bohrung im Gehäuse eine verdampfende Kühlflüssigkeit oder ein Kühlgas in den Reaktorraum eingeleitet werden. Dabei kann der Aggregatzustand des Kühlmediums temperatur- und/oder druckbedingt sein. Es kann sich beispielsweise um Luft, Stickstoff, Kohlendioxid oder andere, inerte Gase oder Flüssigkeiten mit geeignetem Siedepunkt unter erhöhtem Druck handeln. Dabei ist es möglich, dass der Übergang des Kühlmediums vom flüssigen in den gasförmigen Zustand im Reaktor selbst dadurch stattfindet, dass die bei der Reaktion freiwerdende Wärme den Wechsel des Aggregatzustandes bewirkt. Es ist auch möglich, dass die Verdunstungskälte eines sich entspannenden Gases zur Kühlung genutzt wird.
Das den Reaktorraum umschließende Gehäuse kann auch thermostatierbar ausgelegt werden und zur Kühlung verwendet werden; oder das Produkt kann nach Austritt aus dem Gehäuse gekühlt werden. Es kann beispielsweise der Druck im Reaktorraum mittels eines Druckhalteventils eingestellt und gehalten werden, so dass das verwendete Gas in flüssigem oder über- oder unterkritischem Zustand vorliegt. So kann beispielsweise die Verdunstungskälte eines Gases genutzt werden.
Wenn bei erhöhter Temperatur gearbeitet werden soll, kann die für die Erwärmung erforderliche Energie vor dem Austritt aus den Düsen den Reaktanden, beispielsweise in den zuführenden Leitungen, oder über das thermostatierbare Gehäuse oder über das eingeleitete Gas zugeführt werden. Die gewählte Temperatur kann grundsätzlich wegen der hohen Drücke in den Hochdrucklanzen auch erheblich über dem Siedepunkt des flüssigen Mediums liegen. Als flüssiges Medium kommen daher auch solche in Frage, die bei der Temperatur der Reaktion im Gehäuseinneren unter Normaldruck als Gase vorliegen. Die Reaktanden können auch unterschiedliche Temperaturen haben.

Das erfindungsgemäße Verfahren eignet sich für alle durch Azokupplungsreaktion herstellbaren Azofarbmittel, beispielsweise für Azopigmente aus der Reihe der Monoazopigmente, Disazopigmente, β-Naphthol- und Naphthol-AS-Pigmente, verlackten Azopigmente, Benzimidazolonpigmente, Disazokondensationspigmente und Metallkomplexazopigmente; und für Azofarbstoffe aus der Reihe der kationischen, anionischen und nichtionischen Azofarbstoffe, insbesondere Mono-, Dis- und Polyazofarbstoffe, Formazan- und andere Metallkomplexazofarbstoffe und Anthrachinonazofarbstoffe.

Das erfindungsgemäße Verfahren betrifft auch die Herstellung von Vorstufen der eigentlichen Azofarbmittel durch Azokupplungsreaktion. Beispielsweise können mittels des erfindungsgemäßen Verfahrens Vorstufen für verlackte Azofarbmittel, d.h. verlackbare Azofarbmittel, für Disazokondensationspigmente, d.h. über eine bifunktionelle Gruppe verknüpfbare Monoazofarbmittel oder beispielsweise über eine Säurechlorid-Zwischenstufe erweiterbare Disazofarbmittel, für Formazanfarbstoffe, oder andere schwermetallhaltige, beispielsweise kupfer-, chrom-, nickel- oder kobalthaltige Azofarbmittel, d.h. mit Schwermetallen komplexierbare Azofarbmittel, hergestellt werden (siehe auch "The Chemistry of Synthetic Dyes", K. Venkataraman, Academic Press).

Bei den Azofarbstoffen handelt es sich besonders um die Alkalisalze oder Ammoniumsalze der Reaktivfarbstoffe sowie der sauren Wollfarbstoffe oder substantiven Baumwollfarbstoffe der Azoreihe. Als Azofarbstoffe kommen vorzugsweise metallfreie und metallisierbare Mono-, Dis- und Polyazofarbstoffe, und Azofarbstoffe, die eine oder mehrere Sulfonsäuregruppen enthalten, in Betracht.

Bei den nach dem erfindungsgemäßen Verfahren herstellbaren Azofarbmitteln bzw. bei den nach dem erfindungsgemäßen Verfahren herstellbaren Vorstufen von Azofarbmitteln handelt es sich im Falle der Azopigmente insbesondere um C.I. Pigment Yellow 1, 3, 12, 13, 14, 16, 17, 65, 73, 74, 75, 81, 83, 97, 98, 106, 111, 113, 114, 120, 126, 127, 150, 151, 154, 155, 174, 175, 176, 180, 181, 183, 191, 194, 198, 213; Pigment Orange 5, 13, 34, 36, 38, 60, 62, 72, 74; Pigment Red 2, 3, 4, 8, 9, 10, 12, 14, 22, 38, 48:1-4, 49:1, 52:1-2, 53:1-3, 57:1, 60, 60:1, 68, 112, 137, 144, 146, 147, 170, 171, 175, 176, 184, 185, 187, 188, 208, 210, 214, 242, 247, 253, 256, 262, 266; Pigment Violet 32; Pigment Brown 25; gegebenenfalls um deren Vorstufen, die durch Azokupplungsreaktion hergestellt werden.

Im Falle der Azofarbstoffe handelt es sich insbesondere um C.I. Reactive Yellow 15, 17, 23, 25, 27, 37, 39, 42, 57, 82, 87, 95, 111, 125, 142, 143, 148, 160, 161, 165, 168, 176, 181, 205, 206, 207, 208; Reactive Orange 7, 11, 12, 13, 15, 16, 30, 35, 64, 67, 69, 70, 72, 74, 82, 87, 91, 95, 96, 106, 107, 116, 122, 131, 132, 133; Reactive Red 2, 21, 23, 24, 35, 40, 49, 55, 56, 63, 65, 66, 78, 84, 106, 112, 116, 120, 123, 124, 136, 141, 147, 152, 158, 159, 174, 180, 181, 183, 184, 190, 197, 200, 201, 218, 225, 228, 235, 238, 239, 242, 243, 245, 264, 265, 266, 267, 268, 269; Reactive Violet 2, 5, 6, 23, 33, 36, 37; Reactive Blue 19, 28, 73, 89, 98, 104, 113, 120, 122, 158, 184, 193, 195, 203, 213, 214, 225, 238, 264, 265, 267; Reactive Green 32; Reactive Brown 11, 18, 19, 30, 37; Reactive Black 5, 13, 14, 31, 39, 43; Disperse Yellow 3, 23, 60, 211, 241; Disperse Orange 1:1, 3, 21, 25, 29, 30, 45, 53, 56, 80, 66, 138, 149; Disperse Red 1, 13, 17, 50, 56, 65, 82, 106, 134, 136, 137, 151, 167, 167:1, 169, 177, 324, 343, 349, 369, 376; Disperse Blue 79, 102, 125, 130, 165, 165:1, 165:2, 287, 319, 367; Disperse Violet 40, 93, 93:1, 95; Disperse Brown 1, 4:1; Basic Yellow 19; Basic Red 18, 18:1, 22, 23, 24, 46, 51, 54, 115; Basic Blue 41, 149; Mordant Yellow 8, 30; Mordant Red 7, 26, 30, 94; Mordant Blue 9, 13, 49; Mordant Brown 15; Mordant Black 7, 8, 9, 11, 17, 65; Acid Yellow 17, 19, 23, 25, 59, 99, 104, 137, 151, 155, 169, 197, 219, 220, 230, 232, 240, 242, 246, 262; Acid Orange 7, 67, 74, 94, 95, 107, 108, 116, 162, 166; Acid Red 1, 14, 18, 27, 52, 127, 131, 151, 154, 182, 183, 194, 195, 211, 249, 251, 252, 260, 299, 307, 315, 316, 337, 360, 361, 405, 407, 414, 425, 426, 439, 446, 447; Acid Blue 113, 156, 158, 193, 199, 229, 317, 351; Acid Green 73, 109; Acid Brown 172, 194, 226, 289, 298, 413, 415; Acid Black 24, 52, 60, 63, 63:1, 107, 140, 172, 207, 220; Direct Yellow 27, 28, 44, 50, 109, 110, 137, 157, 166, 169; Direct Orange 102, 106; Direct Red 16, 23, 79, 80, 81, 83, 83:1, 84, 89, 212, 218, 227, 239, 254, 262, 277; Direct Violet 9, 47, 51, 66, 95; Direct Blue 71, 78, 94, 98, 225, 229, 244, 290, 301, 312; Direct Green 26, 28, 59; Direct Black 19, 22, 51, 56, 112, 113, 122; gegebenenfalls um deren Vorstufen, die durch Azokupplungsreaktion hergestellt werden.

Zweckmäßigerweise werden bei dem erfindungsgemäßen Verfahren die Reaktanden als wässrige Lösungen oder Suspensionen und vorzugsweise in äquivalenten Mengen dem Mikrojetreaktor zugeführt.

Die Azokupplungsreaktion erfolgt vorzugsweise in wässriger Lösung oder Suspension, es können aber auch organische Lösemittel, gegebenenfalls im Gemisch mit Wasser eingesetzt werden, beispielsweise Alkohole mit 1 bis 10 C-Atomen, wie beispielsweise Methanol, Ethanol, n-Propanol, Isopropanol, Butanole, wie n-Butanol, sek.-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylenglykole oder Polypropylenglykole; Ether, wie Methylisobutylether, Tetrahydrofuran oder Dimethoxyethan; Glykolether, wie Monomethyl- oder Monoethylether des Ethylen- oder Propylenglykols, Diethylenglykol-monomethylether, Diethylenglykolmonoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C1-C6-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäure- oder Benzosäure-C1-C6-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Hexamethylphosphorsäuretriamid, 1,3-Dimetyl-2-imidazolidinon, Dimethylsulfoxid und Sulfolan eingesetzt. Die genannten Lösemittel können auch als Mischungen eingesetzt werden. Vorzugsweise werden mit Wasser mischbare Lösemittel eingesetzt.

Als Reaktanden für die Azokupplungsreaktion werden Diazoniumsalze von aromatischen oder heteroaromatischen Aminen eingesetzt, wie beispielsweise Anilin, 2-Nitroanilin, Anthranilsäuremethylester, 2,5-Dichloro-anilin, 2-Methyl-4-chloroanilin, 2-Chlor-anilin, 2-Trifluormethyl-4-chloroanilin, 2,4,5-Trichloroanilin; 3-Amino-4-methyl-benzamid, 2-Methyl-5-chloranilin, 4-Amino-3-chloro-N'-methylbenzamid, o-Toluidin, o-Dianisidin, 2,2',5,5'-Tetrachlorbenzidin, 2-Amino-5-methyl-benzolsulfonsäure und 2-Amino-4-chloro-5-methyl-benzolsulfonsäure.

Von besonderem Interesse für Azopigmente sind folgende Aminkomponenten: 4-Methyl-2-nitro-phenylamin, 4-Chloro-2-nitro-phenylamin, 3,3'-Dichloro-biphenyl-4,4'-diamin, 3,3'-Dimethyl-biphenyl-4,4'-diamin, 4-Methoxy-2-nitro-phenylamin, 2-Methoxy-4-nitro-phenylamin, 4-Amino-2,5-dimethoxy-N-phenyl-benzensulfonamid, 5-Amino-isophthalsäuredimethylester, Anthranilsäure, 2-Trifluoromethyl-phenylamin, 2-Amino-terephthalsäuredimethylester, 1,2-Bis-(2-Amino-phenoxy)-ethan, 2-Amino-4-chloro-5-methyl-benzensulfonsäure, 2-Methoxyphenylamin, 4-(4-Amino-benzoylamino)-benzamid, 2,4-Dinitro-phenylamin, 3-Amino-4-chloro-benzamid, 3-Amino-4-chloro-benzoesäure, 4-Nitrophenylamin, 2,5-Dichloro-phenylamin, 4-Methyl-2-nitro-phenylamin,2-Chloro-4-nitro-phenylamin, 2-Methyl-5-nitro-phenylamin, 2-Methyl-4-nitro-phenylamin, 2-Methyl-5-nitro-phenylamin, 2-Amino-4-chloro-5-methyl-benzensulfonsäure, 2-Amino-naphthalin-1-sulfonsäure, 2-Amino-5-chloro-4-methyl-benzolsulfonsäure, 2-Amino-5-chloro-4-methyl-benzensulfonsäure, 2-Amino-5-methyl-benzolsulfonsäure, 2,4,5-Trichloro-phenylamin, 3-Amino-4-methoxy-N-phenyl-benzamid, 4-Amino-benzamid, 2-Amino-benzoesäuremethylester, 4-Amino-5-methoxy-2,N-dimethyl-benzensulfonamid, 2-Amino-N-(2,5-dichloro-phenyl)-terephthalsäuremonomethyl ester, 2-Amino-benzoesäurebutylester, 2-Chloro-5-trifluoromethyl-phenylamin, 4-(3-Amino-4-methyl-benzoylamino)-benzensulfonsäure, 4-Amino-2,5-dichloro-N-methyl-benzensulfonamid, 4-Amino-2,5-dichloro-N,N-dimethyl-benzensulfonamid, 6-Amino-1H-chinazolin-2,4-dion, 4-(3-Amino-4-methoxy-benzoylamino)-benzamid und 4-Amino-2,5-dimethoxy-N-methyl-benzensulfonamid, 5-Aminobenzimidazolon, 6-Amino-7-methoxy-1,4-dihydro-chinoxalin-2,3-dion, 3-Amino-4-methyl-benzoesäure-(2-chlorethylester), 3-Amino-4-chlor-benzoesäure-isopropylester, 3-Amino-4-chlor-benzotrifluorid, 3-Amino-4-methyl-benzoesäure-n-propylester, 2-Amino-naphthalin-3,6,8-trisulfonsäure, 2-Amino-naphthalin-4,6,8-trisulfonsäure, 2-Amino-naphthalin-4,8-disulfonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 1-Amino-2-hydroxybenzol-5-sulfonsäure, 1-Amino-4-acetylamino-benzol-2-sulfonsäure, 2-Aminoanisol, 2-Aminomethoxybenzol-ω-methansulfonsäure, 2-Aminophenol-4-sulfonsäure, o-Anisidin-5-sulfonsäure, [2-(3-Amino-1,4-dimethoxy-benzensulfonyl)ethyl]-schwefelsäureester und [2-(1-Methyl-3-amino-4-methoxy-benzensulfonyl)ethyl]-schwefelsäureester.

Von besonderem Interesse für Azofarbstoffe sind folgende Aminkomponenten:
[2-(4-Amino-benzensulfonyl)-ethyl]schwefelsäureester, [2-(4-Amino-5-methoxy-2-methyl-benzensulfonyl)-ethyl] schwefelsäureester, [2-(4-Amino-2,5-dimethoxy-benzensulfonyl)-ethyl] schwefelsäureester, {2-[4-(5-Hydroxy-3-methyl-pyrazol-1-yl)-benzensulfonyl]-ethyl}schwefelsäureester, [2-(3-Amino-4-methoxy-benzensulfonyl)-ethyl]schwefelsäureester und [2-(3-Amino-benzensulfonyl)-ethyl]schwefelsäureester.

Von besonderem Interesse für Azopigmente sind folgende Kupplungskomponenten:
Acetessigsäurearylide der allgemeinen Formel (I), 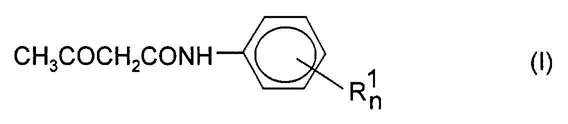 in welcher
- n: eine Zahl von 0 bis 3 bedeutet, und
- R¹: eine C₁-C₄-Alkylgruppe, wie Methyl oder Ethyl; eine C₁-C₄-Alkoxygruppe, wie Methoxy oder Ethoxy; eine Trifluormethylgruppe; eine Nitrogruppe; ein Halogenatom wie Fluor, Chlor oder Brom; eine Brom; eine NHCOCH₃-Gruppe; eine SO₃H-Gruppe; eine SO₂NR¹⁰R¹¹-Gruppe, in der R¹⁰ und R¹¹ gleich oder verschieden sind und Wasserstoff oder C₁-C₄-Alkyl bedeuten; eine COOR¹⁰- Gruppe, in der R¹⁰ die vorstehend genannte Bedeutung hat; oder eine COONR¹²R¹³-Gruppe sein kann, in der R¹² und R¹³ unabhängig voneinander für Wasserstoff, C₁-C₄-Alkyl oder Phenyl steht, wobei der Phenylring durch ein zwei oder drei gleiche oder verschiedene Substituenten aus der Gruppe C₁-C₄-Alkyl, C₁-C₄-Alkoxy, Trifluormethyl, Nitro, Halogen, COOR¹⁰, wobei R¹⁰ die oben genannte Bedeutung hat, COONR¹⁰R¹¹, wobei R¹⁰ und R¹¹ gleich oder verschieden sind und die vorstehend genannte Bedeutung haben, substituiert sein kann,
wobei bei n > 1 R¹ gleich oder verschieden sein kann;

2-Hydroxynaphthaline der allgemeinen Formel (II), 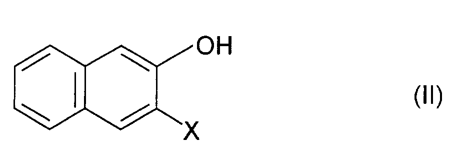 in welcher
- X: für Wasserstoff, für eine COOH-Gruppe oder für eine Gruppe der allgemeinen Formel (III), (VI) oder (VII) steht; 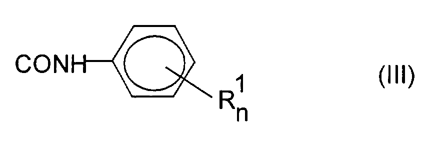 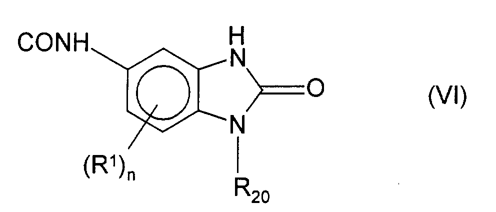 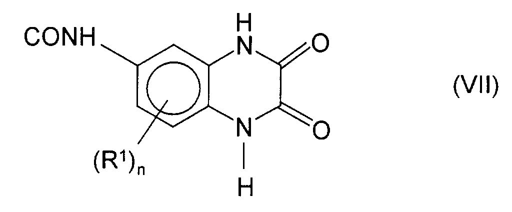
in welcher n und R¹ wie oben definiert sind; und
R²⁰ Wasserstoff, Methyl oder Ethyl bedeutet;

Bisacetoacetylierte Diaminophenyle und -biphenyle, N;N'-Bis(3-hydroxy-2-naphthoyl)-phenylendiamine, wobei der Phenyl- oder Biphenylring unsubstituiert oder mit 1, 2, 3 oder 4 gleichen oder verschiedenen Resten CH₃, C₂H₅, OCH₃, OC₂H₅, NO₂, F, Cl, CF₃ substituiert sein können;

Acetessigsäurearylide von zweikernigen Heterocyclen der allgemeinen Formel (IV), 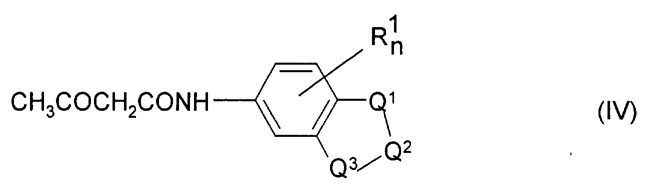 in welcher n und R¹ wie oben definiert sind,
- Q¹, Q² und Q³: gleich oder verschieden sein können und N, NR², CO, N-CO, NR²-CO, CO-N, CO-NR², CH, N-CH, NR²-CH, CH-N, CH-NR², CH₂, N-CH₂, NR²-CH₂, CH₂-N, CH₂-NR² oder SO₂, bedeuten, wobei
- R²: für ein Wasserstoffatom; für eine C₁-C₄-Alkylgruppe, wie Methyl oder Ethyl; oder für eine Phenylgruppe steht, die unsubstituiert oder durch Halogen, C₁-C₄-Alkyl, C₁-C₄-Alkoxy, Trifluormethyl, Nitro, Cyano ein oder mehrfach substituiert sein kann,
mit der Maßgabe, dass die Kombination von Q¹, Q² und Q³ mit den zwei Kohlenstoffatomen des Phenylrings einen gesättigten oder ungesättigten, fünf oder sechsgliedrigen Ring ergibt;
bevorzugt Acetessigsäurearylide der allgemeinen Formel (VIa) und (VIIa), 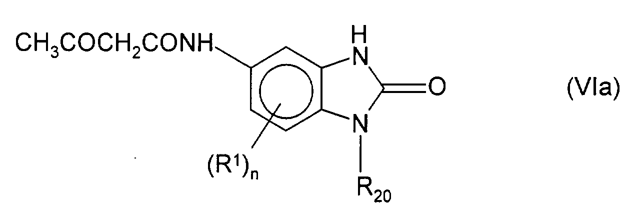 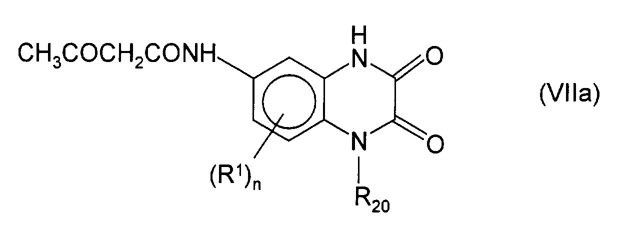 worin R¹ und n wie vorstehend definiert und R²⁰ Wasserstoff, Methyl oder Ethyl ist;
sowie Pyrazolone der allgemeinen Formel (V), 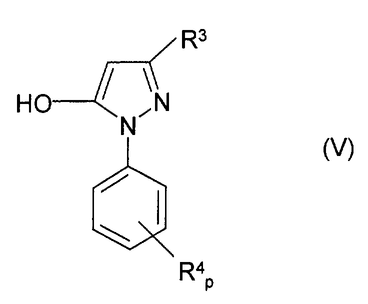 in welcher
- R³: eine Gruppe CH₃, COOCH₃ oder COOC₂H₅,
- R⁴: eine Gruppe CH₃, SO₃H oder ein Chlor-Atom, und
- p: eine Zahl von 0 bis 3 bedeutet,
wobei bei p > 1 R⁴ gleich oder verschieden sein kann.

Von besonderem Interesse für Azofarbstoffe sind folgende Kupplungskomponenten: 4-[5-Hydroxy-3-methyl-pyrazol-1-yl]-benzensulfonsäure, 2-Amino-naphthalin-1,5-disulfonsäure, 5-Methoxy-2-methyl-4[3-oxo-butyrylamino]-benzensulfonsäure, 2-Methoxy-5-methyl-4-[3-oxo-butyrylamino]-benzensulfonsäure, 4-Acetylamino-2-amino-benzensulfonsäure, 4-[4-Chloro-6-(3-sulfo-phenylamino)-[1,3,5]-triazin-2-yl-amino]-5-hydroxy-naphthalin-2,7-disulfonsäure, 4-Acetylamino-5-hydroxy-naphthalin-2,7-disulfonsäure, 4-Amino-5-hydroxy-naphthalin-2,7-disulfonsäure, 5-Hydroxy-1-[4-sulfophenyl]-1H-pyrazol-3-carbonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 2-Aminoanisol, 2-Aminomethoxybenzol-ω-methansulfonsäure und 1,3,5-Trishydroxybenzol.

Im erfindungsgemäßen Verfahren zur Herstellung von Azofarbmitteln können auch die in den konventionellen Verfahren verwendeten Hilfsmittel wie beispielsweise Tenside, pigmentäre und nichtpigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon eingesetzt werden.
Die Zugabe der Hilfsmittel kann zu einem beliebigen Zeitpunkt vor, während oder nach der Reaktion im Mikrojetreaktor erfolgen, auf einmal oder in mehreren Portionen. Dabei können die Hilfsmittel beispielsweise vor dem Einspritzen zu den Lösungen oder Suspensionen der Reaktanden, aber auch während der Reaktion in flüssiger, gelöster oder suspendierter Form mittels eines separaten Strahls durch Einspritzen in den Kollisionspunkt zugegeben werden.
Die Gesamtmenge der zugegebenen Hilfsmittel kann 0 bis 40 Gew.-%, bevorzugt 1 bis 30 Gew.-%, besonders bevorzugt 2,5 bis 25 Gew.-%, bezogen auf das Azofarbmittel, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Kollision nicht schäumen.

Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht durch chemische Modifikation von organischen Pigmente abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse® , Avecia; Disperbyk® , Byk, Efka® , Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinenmonomeren oder Vinylmonomeren und ethylenisch ungesättigten Carbonsäureestern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Kammdispergiermittel aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermittel sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalen oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäuregruppen haltige Pigmentdispergatoren, Sulfonamidgruppen haltige Pigmentdispergatoren, Ethergruppen haltige Pigmentdispergatoren, oder Carbonsäure-, Carbonsäureester- oder Carbonamidgruppen haltige Pigmentdispergatoren.

Da das Einhalten eines gewünschten pH-Wertes während und nach der Reaktion oft entscheidend für die Qualität ist, können vor den Einspritzdüsen oder auch durch Einspritzen mittels eines separaten Strahls in den Kollisionspunkt Pufferlösungen zugeführt werden, vorzugsweise von organischen Säuren und deren Salzen, wie beispielsweise Ameisensäure/Formiat-Puffer, Essigsäure/Acetat-Puffer, Zitronensäure/Citrat-Puffer; oder von anorganischen Säuren und deren Salzen, wie beispielsweise Phosphorsäure/Phosphat-Puffer oder Kohlensäure/ Hydrogencarbonat- bzw. Carbonat-Puffer.

Es können für die Reaktanden, Hilfsmittel oder Pufferlösungen auch unterschiedliche Strahlweiten oder eine unterschiedliche Anzahl von Strahlen verwendet werden und damit beispielsweise erforderliche, unterschiedliche Volumenverhältnisse realisiert werden. Es ist mit dem erfindungsgemäßen Verfahren auch möglich, durch den Einsatz mehr als eines Diazoniumsalzes und/oder mehr als einer Kupplungskomponente Mischungen oder auch, im Falle von festen Produkten, Mischkristalle von Azofarbmitteln herzustellen. Dabei können die Reaktanden als Mischung oder getrennt eingespritzt werden.

Vorzugsweise wird das Azofarbmittel direkt nach der Reaktion isoliert. Es ist aber auch möglich, eine Nachbehandlung (Finish) mit Wasser und/oder einem organischen Lösemittel durchzuführen, beispielsweise bei Temperaturen von 20 bis 250°C, gegebenenfalls auch unter Zusatz von Hilfsmitteln.

Es war überraschend und nicht vorhersehbar, dass die Herstellung von Azofarbmitteln durch den Zusammenprall von Strahlen in einem Mikrojetreaktor in dieser einfachen und technisch umkomplizierten Weise ohne ökologische Probleme möglich ist. Das erfindungsgemäße Verfahren eignet sich universell zur Herstellung für in Form einer Suspension oder in Form einer Lösung anfallenden Azofarbmittel. Die intensive und sehr schnelle Durchmischung der Reaktanden sorgt für einen schnellen und vollständigen Umsatz und damit für konstante und reproduzierbare Reaktionsbedingungen und die gewünschte Qualitätskonstanz. Verstopfungen, wie sie im Falle der bislang bekannten Mikroreaktoren bei Einsatz oder Auftreten von festen Substanzen eintreten, können sicher vermieden werden. Auch ist der scale-up einfach durchzuführen, da beispielsweise die üblicherweise auftretenden, drastischen Änderungen der Oberflächen-Volumen-Verhältnisse oder der Durchmischungsverhältnisse nicht stattfinden.

Erfindungsgemäß hergestellte Azofarbmittel, besonders die Azopigmente, eignen sich zum Färben von natürlichen oder synthetischen hochmolekularen organischen Materialien, wie beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, PolyacryInitril, Polyacrylsäureester, Polyamide, Polyurethane oder Polyester, Gummi, Latices, Casein, Silikone und Silikonharze, einzeln oder in Mischungen.
Dabei spielt es keine Rolle, ob die erwähnten hochmolekularen organischen Verbindungen als plastische Massen, Gießharze, Pasten, Schmelzen oder in Form von Spinnlösungen, Lacken, Lasuren, Schäumen, Tuschen, Tinten, Beizen, Anstrichstoffen, Dispersionsfarben oder Druckfarben vorliegen. Je nach Verwendungszweck erweist es sich als vorteilhaft, die erfindungsgemäß erhaltenen Azofarbmittel als Blends oder in Form von Präparationen oder Dispersionen zu benutzen. Bezogen auf das zu färbende, hochmolekulare organische Material setzt man die erfindungsgemäß hergestellten Azofarbmittel in einer Menge von vorzugsweise 0,05 bis 30 Gew.-%, vorzugsweise 0,1 bis 15 Gew.-% ein. Mit den nach dem erfindungsgemäßen Verfahren hergestellten Azopigmenten können beispielsweise die technisch gängigen Einbrennlacke aus der Klasse der Alkyd-Melamin-Harzlacke, Acryl-Melamin-Harzlacke, Polyesterlacke, Highsolidacrylharzlacke, wässrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß hergestellten Azofarbmittel sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Azofarbmittel geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Azofarbmittel als Farbmittel in Ink-Jet Tinten auf wässriger und nichtwässriger Basis sowie in solchen Tinten, die nach dem hot-melt-Verfahren arbeiten, geeignet.

Darüber hinaus sind die erfindungsgemäß hergestellten Azofarbmittel auch als Farbmittel für Farbfilter, sowohl für die subtraktive als auch für die additive Farberzeugung, geeignet.

Die erfindungsgemäß hergestellten Azofarbmittel, besonders die Azofarbstoffe, eignen sich zum Färben oder Bedrucken von Hydroxygruppen oder Stickstoffatome aufweisenden natürlichen organischen sowie synthetischen Substraten. Solche Substrate sind beispielsweise synthetische oder natürliche Fasermaterialien, ferner Ledermaterialien, die überwiegend natürliche oder regenerierte Cellulose oder natürliche oder synthetische Polyamide enthalten. Vorzugsweise eignen sie sich zum Färben und Bedrucken von Textilmaterial auf der Basis von Acetat-, Polyester-, Polyamid-, Polyacrylnitril-, PVC- und Polyurethanfasern sowie von Wolle oder insbesondere Baumwolle. Für diesen Zweck können die Farbmittel auf die Textilmaterialien durch die gewöhnlichen Auszieh-, Klotz- oder Druckverfahren aufgebracht werden.

Zur Beurteilung der Eigenschaften der nach der vorliegenden Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat, ein High-Solid-Acrylharzeinbrennlack auf Basis einer nichtwässrigen Dispersion (HS) sowie ein wässriger Lack auf Polyurethanbasis (PUR) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.
Die Bestimmung der Lösemittelechtheit erfolgte nach DIN 55976.
Die Bestimmung der Überlackierechtheit erfolgte nach DIN 53221.

Im vorangegangenen Text und in den nachstehenden Beispielen beziehen sich Teile jeweils auf Gewichtsteile und Prozent jeweils auf Gewichtsprozent der so beschriebenen Substanzen.

### Beispiel 1

Eine ca. 5%ige wässrige 3,3'-Dichlorbenzidintetrazolösung mit einer Temperatur von 0°C, hergestellt aus Bisdiazotierung von 253 Teilen 3,3'-Dichlorbenzidin in verdünnter HCI und Natriumnitrit) wird mit 26 bar durch die eine von zwei sich frontal gegenüberstehenden Düsen mit Durchmesser von jeweils 300 µm eines Zweistrahl-Mikrojetreaktors gepumpt. Durch die zweite Düse wird mit dem gleichen Druck eine ca. 5%ige wässrige Kuppelkomponentenlösung mit einer Temperatur von 10°C (hergestellt durch Lösen von 354 Teilen Acetessiganilid in verdünnter Natronlauge, gepuffert durch Zugabe von 164 Teilen Natriumacetat) gepumpt. Die Strahlen prallen frontal in einer Gasatmosphäre aufeinander. Die entstehende Pigmentsuspension wird durch einen Druckluftstrom von ca. 700 l/h ausgetragen, gleichzeitig dient der Druckluftstrom zur Aufrechterhaltung der Gasatmosphäre am Kollisionspunkt der Strahlen. Der Druckluftstrom tritt senkrecht zu den beiden Strahlen durch eine Öffnung im Reaktorgehäuse ein. Die Austrittsöffnung für die Druckluft und die Pigmentsuspension liegt auf der gegenüberliegenden Seite zur Eintrittsöffnung des Druckluftstroms.
Ca. 900 Teile der entstandenen Pigmentsuspension werden aufgefangen, auf 95°C erhitzt und 30 min bei 95°C gerührt. Nach Abkühlen auf 80°C wird filtriert, mit Wasser salzfrei gewaschen und der Presskuchen bei 15 h bei 95°C getrocknet und dann gemahlen. Man erhält 44 Teile Pigment Yellow 12.

Mit dem Pigment wird eine Offsetdruckfarbe mit einem handelsüblichen heatset Offsetfirnis auf Basis eines Hartharzes in Mineralöl hergestellt. Die Druckfarbe zeichnet sich im Vergleich zu einer Druckfarbe, die mit einem handelsüblichen Pigment Yellow 12 hergestellt wurde, durch deutlich höhere Farbstärke, bedeutend höhere Transparenz und höheren Glanz aus.

### Beispiel 2

### a) Diazonium-Salz-Lösung

729 Teile 2,5-Dichloranilin werden in 2074,5 Teilen Wasser und 2177,8 Teilen wässriger Salzsäure 31 %ig bei Raumtemperatur 8 h gerührt. Durch Zugabe von 1500 Teilen Eis wird auf -10°C gekühlt. Bei dieser Temperatur werden 770,4 Teile wässriger Natriumnitrit-Lösung 40 %ig schnell zugegeben und 1 h gerührt. Zur Klärung der Diazonium-Salz-Lösung werden 50 g Tonsil zugegeben und abgesaugt. Die Diazonium-Salz-Lösung wird mit Wasser auf 10 Liter Gesamtvolumen aufgefüllt.

### b) Lösung der Kuppelkomponente

1264,5 Teile Naphtol AS werden in eine 80°C warme Mischung aus 9000 Teilen Wasser und 1222,2 Teilen wässriger Natronlauge 33 %ig eingetragen und gelöst.

### c) Azokupplung im Mikrojetreaktor

Die Azokupplung findet in dem Mikrojetreaktor statt, der in Beispiel 1 verwendet wurde. Dabei wird die Diazonium-Salz-Lösung mit 27 bar und die Lösung der Kuppelkomponente mit 31 bar durch die beiden Düsen aufeinandergespritzt, der Druckluftstrom zum Austragen der entstehenden Pigmentsuspension beträgt ca. 700 l/h.
Die entstandene Pigmentsuspension wird bei 40°C für ca. 1 h gerührt, dann filtriert und mit Wasser salzfrei gewaschen. Der Presskuchen wird bei 80°C getrocknet. Man erhält Pigment Red 2.
Mit dem Pigment wird eine Offsetdruckfarbe mit einem handelsüblichen heatset Offsetfirnis auf Basis eines Hartharzes in Mineralöl hergestellt. Die Druckfarbe zeichnet sich durch eine hohe Farbstärke, Transparenz und Helligkeit aus.

### Beispiel 3

### a) Diazonium-Salz-Lösung

371 Teile 3-Amino-4-Methoxy-benzoesäureanilid werden in 4500 Teilen Wasser und 808,5 Teilen wässrige Salzsäure 31 %ig für 8 h angerührt. Nach Zugabe von 1000 Teilen Eis wird durch Zugabe von 260,7 Teilen wässriger Natriumnitrit-Lösung 40 %ig diazotiert. Dann werden 11 Teile eines C16-C18-Fettalkoholethoxylat mit 25 Ethylenoxideinheiten und 200 Teile Natriumacetat wasserfrei zugeben und das Volumen mit Wasser auf 10 Liter gestellt.

### b) Lösung der Kuppelkomponente

In 4000 Teile Wasser mit einer Temperatur von 85°C werden 600 Teile Naphtol AS-LC eingetragen und mit 502,5 Teilen wässriger Natronlauge 33 %ig gelöst. Es werden 11 Teile eines Methyltaurid-Natriumsalzes auf Basis pflanzlicher Mischfettsäuren zugegeben und mit Wasser auf ein Volumen von 10 Litern und die Temperatur auf 65°C eingestellt.

### c) Azokupplung im Mikrojetreaktor

Die Azokupplung findet in dem Mikrojetreaktor statt, der in Beispiel 1 verwendet wurde. Dabei wird die Diazonium-Salz-Lösung und die Lösung der Kuppelkomponente mit 43 bis 45 bar durch die beiden Düsen aufeinandergespritzt, der Druckluftstrom zum Austragen der entstehenden Pigmentsuspension beträgt ca. 700 l/h. Die Temperatur der ausgetragenen Pigmentsuspension beträgt 35 bis 40°C. Die entstandene Pigmentsuspension wird bei ca. 40°C für ca. 15 min gerührt, dann filtriert und mit Wasser salzfrei gewaschen. Der Presskuchen wird bei 80°C getrocknet. Man erhält Pigment Red 146.
Mit dem Pigment wird eine Tiefdruckfarbe mit einem handelsüblichen Nitrocellulose-Tiefdruckfirnis auf Basis einer Collodiumwolle in Ethylacetat hergestellt.
Die Druckfarbe zeichnet sich im Vergleich zu einer Druckfarbe, die mit einem handelsüblichen Pigment Red 146 hergestellt wurde, durch wesentlich höhere Transparenz und merklich höheren Glanz aus.

### Beispiel 4

### a) Diazonium-Salz-Suspension

287,3 Teile 2-Amino-4-chlor-5-methylbenzolsulfonsäure werden in 2600 Teilen Wasser und 174,2 Teilen wässrige Natronlauge 33 %ig bei 80°C gelöst, die Lösung wird filtriert. Nach Abkühlen auf 40°C werden 465,5 Teile wässrige Salzsäure 31 %ig zugegeben. Die Fällung wird über Nacht bei Raumtemperatur gerührt. Durch Zugabe von 227,7 Teilen wässriger Natriumnitrit-Lösung 40 %ig wird diazotiert. Mit Wasser wird das Volumen der Diazonium-Salz-Suspension auf ca. 8 Liter eingestellt.

### b) Lösung der Kuppelkomponente

429 Teile Pyrazolsäure werden in 2600 Teilen Wasser mit 194,2 Teilen wässriger Natronlauge 33 %ig gelöst. Mit Wasser wird das Volumen der Lösung der Kuppelkomponente auf ca. 8 Liter eingestellt, durch Einleiten von Dampf wird auf 53°C erwärmt, anschließend werden 553,8 Teile di-Natriumhydrogenphosphat 98%ig zugegeben.

### c) Azokupplung im Mikrojetreaktor

Die Azokupplung findet in dem Mikrojetreaktor statt, der in Beispiel 1 verwendet wurde. Dabei wird die Diazonium-Salz-Suspension mit ca. 45 bar und die Lösung der Kuppelkomponente mit ca. 34 bar durch die beiden Düsen aufeinandergespritzt, der Druckluftstrom zum Austragen der entstehenden Pigmentsuspension beträgt ca. 1000 l/h.
1500 Teile der Pigmentsuspension werden auf 80°C erwärmt, mit wässriger Salzsäure 25%ig wird pH 2 gestellt und 15 Minuten gerührt. Es werden eine 80°C warme Lösung aus 0,82 Teilen Stearinsäure in 10 Teilen Wasser und 3 Tropfen wässriger Natronlauge 33 %ig und anschließend 30,92 Teile Calciumchlorid zugegeben. Nach 2 stündigem Rühren bei 80°C wird abgesaugt, erst mit salzsaurem Wasser mit pH 2 und dann mit Wasser gewaschen. Der Presskuchen wird bei 80°C getrocknet.
Man erhält 31,6 Teile Pigment Yellow 191.

### d) Konventionell hergestelltes Pigment Yellow 191

Die Diazonium-Salz-Suspension wird gemäß Beispiel 4a) hergestellt.
Die Lösung der Kuppelkomponente wird gemäß Beispiel 4b) hergestellt mit dem Unterschied, dass kein di-Natriumhydrogenphosphat zugegeben wird.
Die konventionelle Azokupplung wird so durchgeführt, dass in die vorgelegte, 40°C warme Lösung der Kuppelkomponente die Diazonium-Salz-Suspension zugetropft wird. Dabei wird bei Bedarf durch paralleles Zutropfen einer Lösung aus 70,7 Teilen di-Natriumhydrogenphosphat in 400 Teilen 80°C warmen Wasser in entstehende Pigmentsuspension der pH-Wert bei 6,3 gehalten. Nach vollständiger Zugabe der Diazonium-Salz-Lösung wird auf 80°C erwärmt, mit wässriger Salzsäure 25%ig pH 2,0 eingestellt, dann eine Lösung von 1,1 Teilen Stearinsäure in Wasser und wenigen Tropfen wässriger Natronlauge 33%ig und zuletzt 33,3 Teile Calciumchlorid zugegeben. Nach 2 stündigem Rühren bei 80°C wird abgesaugt, erst mit salzsaurem Wasser mit pH 2 und dann mit Wasser gewaschen. Der Presskuchen wird bei 80°C getrocknet.
Man erhält 41 Teile Pigment Yellow 191.

### e) Prüfung in Weich-PVC

In einem handelsüblichen Weich-PVC-Prüfsystem wird mit den Pigmenten, hergestellt gemäß Beispiel 4 c und Beispiel 4 d, jeweils eine transparente PVC-Folie angefertigt. Das erfindungsgemäß nach Beispiel 4 c hergestellte Pigment liefert eine farbstarke, transparente, helle und reine PVC-Färbung. Das gemäß Beispiel 4 d konventionell hergestellte Pigment ist ungenügend dispergierbar, die PVC-Folie zeigt deutliche Stippen und ist farbschwächer.

### Beispiel 5:

Eine ca. 3 %ige wässrige 3,3'-Dichlorbenzidintetrazolösung mit einer Temperatur von 10°C, hergestellt aus Bisdiazotierung von 253 Teilen 3,3'-Dichlorbenzidin in verdünnter HCI und Natriumnitrit) wird mit 25 bar durch die eine Düse des im Beispiel 1 verwendeten Mikrojetreaktors gepumpt, durch die zweite Düse wird mit dem gleichen Druck eine ca. 3 %ige wässrige Kuppelkomponentenlösung mit einer Temperatur von 20°C (hergestellt durch Lösen von 354 Teilen Acetessiganilid in verdünnter Natronlauge, gepuffert durch Zugabe von 164 Teilen Natriumacetat) gepumpt. Der Druckluftstrom beträgt ca. 700 l/h.
Ca. 900 Teile der entstandenen Pigmentsuspension werden aufgefangen, auf 95°C erhitzt und 2 h bei 95°C gerührt. Nach Abkühlen auf 80°C wird filtriert, mit Wasser salzfrei gewaschen und der Presskuchen 15 h bei 95°C getrocknet und dann gemahlen. Man erhält 26 Teile Pigment Yellow 12.
Mit dem Pigment wird eine Offsetdruckfarbe mit einem handelsüblichen heatset Offsetfirnis auf Basis eines Hartharzes in Mineralöl hergestellt. Die Druckfarbe zeichnet sich im Vergleich zu einer Druckfarbe, die mit einem handelsüblichen Pigment Yellow 12 hergestellt wurde, durch deutlich höhere Farbstärke und höhere Transparenz und Glanz aus. Die mit Elektronenmikroskopie bestimmte Teilchengrößenverteilung zeigt für das mit dem Mikrojetreaktor hergestellte Pigment einen um ca. 30 % erniedrigten Mittelwert gegenüber dem handelsüblichen P.Y.12.

## Patentansprüche

1. Verfahren zur Herstellung von Azofarbmitteln, **dadurch gekennzeichnet, dass** eine oder mehrere Kupplungskomponenten einzeln oder in Mischung und ein oder mehrere kupplungsfähige Diazoniumsalze einzeln oder in Mischung in Form ihrer Lösungen oder als Suspensionen in einem Mikrojetreaktor durch Düsen in einem von einem Gehäuse umschlossenen Reaktorraum auf einen gemeinsamen Kollisionspunkt gespritzt werden, wobei über eine Öffnung im Gehäuse in den Reaktorraum ein Gas oder eine verdampfende Flüssigkeit zur Aufrechterhaltung einer Gasatmosphäre im Reaktorraum eingeleitet wird, und die entstehende Lösung oder Suspension des Produkts und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

2. Verfahren nach Anspruch 1, **dadurch gekennzeichnet, dass** die Lösungen oder Suspensionen unter einem Druck von mindestens 10 bar, vorzugsweise von 50 bar bis 5000 bar, in den Reaktorraum gespritzt werden.

3. Verfahren nach Anspruch 1 oder 2, **dadurch gekennzeichnet, dass** die Temperatur der Lösungen oder Suspensionen -10 bis +90°C, vorzugsweise -5 bis +80°C, beträgt.

4. Verfahren nach mindestens einem der Ansprüche 1 bis 3, **dadurch gekennzeichnet, dass** das Gas Luft, Stickstoff oder Kohlendioxid ist.

5. Verfahren nach mindestens einem der Ansprüche 1 bis 4, **dadurch gekennzeichnet, dass** das Azofarbmittel ein Azopigment aus der Gruppe der Monoazopigmente, Disazopigmente, β-Naphthol- und Naphthol-AS-Pigmente, verlackten Azopigmente, Benzimidazolonpigmente, Disazokondensationspigmente und Metallkomplexazopigmente ist.

6. Verfahren nach mindestens einem der Ansprüche 1 bis 4, **dadurch gekennzeichnet, dass** das Azofarbmittel ein Azofarbstoff aus der Gruppe der kationischen, anionischen und nichtionischen Azofarbstoffe, Mono-, Dis- und Polyazofarbstoffe, Metallkomplexazofarbstoffe, Formazanfarbstoffe und Anthrachinonazofarbstoffe ist.

7. Verfahren nach mindestens einem der Ansprüche 1 bis 6, **dadurch gekennzeichnet, dass** das kupplungsfähige Diazoniumsalz ein Diazoniumsalz einer Aminkomponente aus der Gruppe Anilin, 2-Nitroanilin, Anthranilsäuremethylester, 2,5-Dichloro-anilin, 2-Methyl-4-chloroanilin, 2-Trifluormethyl-4-chloroanilin, 2,4,5-Trichloroanilin; 3-Amino-4-methyl-benzamid, 4-Amino-3-chloro-N'-methylbenzamid, o-Toluidin, o-Dianisidin, 2,2',5,5'-Tetrachlorbenzidin, 2-Amino-5-methyl-benzolsulfonsäure, 2-Amino-4-chloro-5-methyl-benzolsulfonsäure, 4-Methyl-2-nitro-phenylamin, 4-Chloro-2-nitro-phenylamin, 3,3'-Dichloro-biphenyl-4,4'-diamin, 3,3'-Dimethyl-biphenyl-4,4'-diamin, 4-Methoxy-2-nitro-phenylamin, 2-Methoxy-4-nitro-phenylamin, 4-Amino-2,5-dimethoxy-N-phenyl-benzensulfonamid, 5-Amino-isophthalsäuredimethylester, Anthranilsäure, 2-Trifluoromethyl-phenylamin, 2-Amino-terephthalsäuredimethylester, 1,2-Bis-(2-Amino-phenoxy)-ethan, 2-Amino-4-chloro-5-methyl-benzensulfonsäure, 2-Methoxyphenylamin, 4-(4-Amino-benzoylamino)-benzamid, 2,4-Dinitro-phenylamin, 3-Amino-4-chloro-benzamid, 3-Amino-4-chloro-benzoesäure, 4-Nitrophenylamin, 2,5-Dichloro-phenylamin, 4-Methyl-2-nitro-phenylamin, 2-Chloro-4-nitro-phenylamin, 2-Methyl-5-nitro-phenylamin, 2-Methyl-4-nitro-phenylamin, 2-Methyl-5-nitro-phenylamin, 2-Amino-4-chloro-5-methyl-benzensulfonsäure, 2-Amino-naphthalin-1-sulfonsäure, 2-Amino-5-chloro-4-methyl-benzolsulfonsäure, 2-Amino-5-chloro-4-methyl-benzensulfonsäure, 2-Amino-5-methyl-benzolsulfonsäure, 2,4,5-Trichloro-phenylamin, 3-Amino-4-methoxy-N-phenyl-benzamid, 4-Amino-benzamid, 2-Amino-benzoesäuremethylester, 4-Amino-5-methoxy-2,N-dimethyl-benzensulfonamid, 2-Amino-N-(2,5-dichloro-phenyl)-terephthalsäuremonomethyl ester, 2-Amino-benzoesäurebutylester, 2-Chloro-5-trifluoromethyl-phenylamin, 4-(3-Amino-4-methyl-benzoylamino)-benzensulfonsäure, 4-Amino-2,5-dichloro-N-methyl-benzensulfonamid, 4-Amino-2,5-dichloro-N,N-dimethyl-benzensulfonamid, 6-Amino-1H-chinazolin-2,4-dion, 4-(3-Amino-4-methoxy-benzoylamino)-benzamid, 4-Amino-2,5-dimethoxy-N-methyl-benzensulfonamid, 5-Aminobenzimidazolon, 6-Amino-7-methoxy-1,4-dihydrochinoxalin-2,3-dion, 3-Amino-4-methyl-benzoesäure-(2-chlorethylester), 3-Amino-4-chlor-benzoesäure-isopropylester, 3-Amino-4-chlor-benzotrifluorid, 3-Amino-4-methyl-benzoesäure-n-propylester, 2-Amino-naphthalin-3,6,8-trisulfonsäure, 2-Amino-naphthalin-4,6,8-trisulfonsäure, 2-Amino-naphthalin-4,8-disulfonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 1-Amino-2-hydroxybenzol-5-sulfonsäure, 1-Amino-4-acetylamino-benzol-2-sulfonsäure, 2-Aminoanisol, 2-Aminomethoxybenzol-ω-methansulfonsäure, 2-Aminophenol-4-sulfonsäure, o-Anisidin-5-sulfonsäure, [2-(3-Amino-1,4-dimethoxy-benzensulfonyl)ethyl]-schwefelsäureester und [2-(1-Methyl-3-amino-4-methoxy-benzensulfonyl)ethyl]-schwefelsäureester, [2-(4-Amino-benzensulfonyl)-ethyl]schwefelsäureester, [2-(4-Amino-5-methoxy-2-methyl-benzensulfonyl)-ethyl] schwefelsäureester, [2-(4-Amino-2,5-dimethoxy-benzensulfonyl)-ethyl] schwefelsäureester, {2-[4-(5-Hydroxy-3-methyl-pyrazol-1-yl)-benzensulfonyl]-ethyl}schwefelsäureester, [2-(3-Amino-4-methoxy-benzensulfonyl)-ethyl]schwefelsäureester und [2-(3-Amino-benzensulfonyl)-ethyl]schwefelsäureester ist.

8. Verfahren nach mindestens einem der Ansprüche 1 bis 7, **dadurch gekennzeichnet, dass** die Kupplungskomponente ein Acetessigsäurearylid der allgemeinen Formel (I), 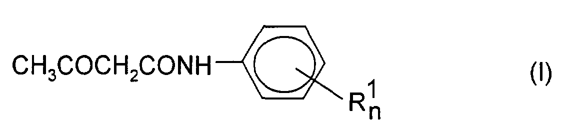 in welcher
n eine Zahl von 0 bis 3 bedeutet, und
R¹ eine C₁-C₄-Alkylgruppe; eine C₁-C₄-Alkoxygruppe; eine Trifluormethylgruppe; eine Nitrogruppe; ein Halogenatom wie Fluor, Chlor oder Brom; eine NHCOCH₃-Gruppe; eine SO₃H-Gruppe; eine SO₂NR¹⁰R¹¹-Gruppe, in der R¹⁰ und R¹¹ gleich oder verschieden sind und Wasserstoff oder C₁-C₄-Alkyl bedeuten; eine COOR¹⁰-Gruppe; oder eine COONR¹²R¹³-Gruppe sein kann, in der R¹² und R¹³ unabhängig voneinander für Wasserstoff, C₁-C₄-Alkyl oder Phenyl steht, wobei der Phenylring durch ein zwei oder drei gleiche oder verschiedene Substituenten aus der Gruppe C₁-C₄-Alkyl, C₁-C₄-Alkoxy, Trifluormethyl, Nitro, Halogen, COOR¹⁰, COONR¹⁰R¹¹, wobei R¹⁰ und R¹¹ gleich oder verschieden sind, substituiert sein kann,
wobei bei n > 1 R¹ gleich oder verschieden sein kann;
ein 2-Hydroxynaphthalin der allgemeinen Formel (II), 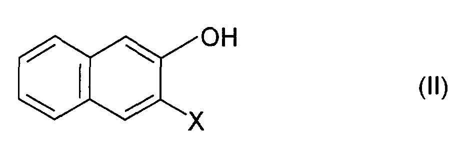 in welcher
X für Wasserstoff, für eine COOH-Gruppe oder für eine Gruppe der allgemeinen Formel (III), (VI) oder (VII) steht, 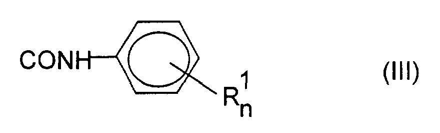 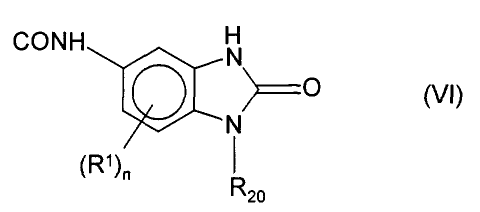 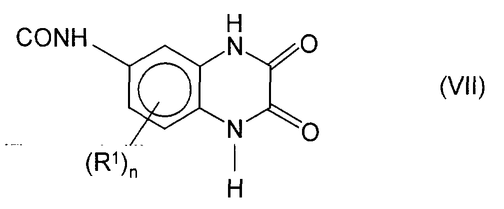
in welcher n und R¹ wie oben definiert sind; und
R²⁰ Wasserstoff, Methyl oder Ethyl bedeutet;
oder die Kupplungskomponente
ein bisacetoacetyliertes Diaminophenyl oder -biphenyl,
wobei der Phenyl- oder Biphenylring unsubstituiert oder mit 1, 2, 3 oder 4 gleichen oder verschiedenen Resten CH₃, C₂H₅, OCH₃, OC₂H₅, NO₂, F, Cl, CF₃ substituiert ist;
ein Acetessigsäurearylid von einem zweikernigen Heterocyclus der allgemeinen Formel (IV), 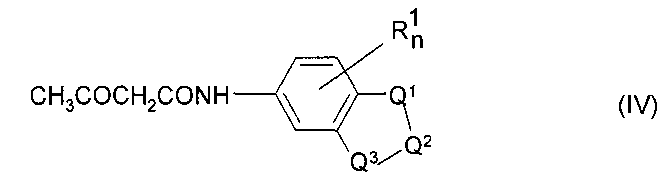 in welcher
Q¹, Q² und Q³ gleich oder verschieden sind und N, NR², CO, N-CO, NR²-CO, CO-N, CO-NR², CH, N-CH, NR²-CH, CH-N, CH-NR², CH₂, N-CH₂, NR²-CH₂, CH₂-N, CH₂-NR² oder SO₂, bedeuten, wobei
R² für ein Wasserstoffatom; für eine C₁-C₄-Alkylgruppe, oder für eine Phenylgruppe steht, die unsubstituiert oder durch Halogen, C₁-C₄-Alkyl, C₁-C₄-Alkoxy, Trifluormethyl, Nitro, Cyano ein oder mehrfach substituiert ist, mit der Maßgabe, dass die Kombination von Q¹, Q² und Q³ mit den zwei Kohlenstoffatomen des Phenylrings einen gesättigten oder ungesättigten, fünf- oder sechsgliedrigen Ring ergibt;
oder ein Pyrazolon der allgemeinen Formel (V), 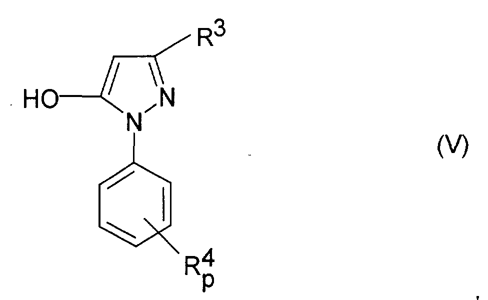 in welcher
R³ eine Gruppe CH₃, COOCH₃ oder COOC₂H₅,
R⁴ eine Gruppe CH₃, SO₃H oder ein Chlor-Atom, und
p eine Zahl von 0 bis 3 bedeutet,
wobei, bei p > 1, R⁴ gleich oder verschieden sein kann,
oder die Kupplungskomponente eine Verbindung aus der Gruppe 4-[5-Hydroxy-3-methyl-pyrazol-1-yl]-benzensulfonsäure, 2-Amino-naphthalin-1,5-disulfonsäure, 5-Methoxy-2-methyl-4[3-oxo-butyrylamino]-benzensulfonsäure, 2-Methoxy-5-methyl-4-[3-oxo-butyrylamino]-benzensulfonsäure, 4-Acetylamino-2-amino-benzensulfonsäure, 4-[4-Chloro-6-(3-sulfo-phenylamino)-[1,3,5]-triazin-2-yl-amino]-5-hydroxy-naphthalin-2,7-disulfonsäure, 4-Acetylamino-5-hydroxy-naphthalin-2,7-disulfonsäure, 4-Amino-5-hydroxy-naphthalin-2,7-disulfonsäure, 5-Hydroxy-1-[4-sulfophenyl]-1H-pyrazol-3-carbonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 2-Aminoanisol, 2-Aminomethoxybenzol-ω-methansulfonsäure und 1,3,5-Trihydroxybenzol ist.

9. Verfahren nach mindestens einem der Ansprüche 1 bis 8, **dadurch gekennzeichnet, dass** verlackbare Azofarbmittel, zu Disazokondensationspigmenten verknüpfbare Monoazofarbmittel, zu Disazokondensationspigmenten erweiterbare Disazofarbmittel, oder mit Schwermetallen komplexierbare Azofarbmittel mittels Azokupplungsreaktion hergestellt werden.

10. Verfahren nach mindestens einem der Ansprüche 1 bis 9, **dadurch gekennzeichnet, dass** die Reaktanden als wässrige, wässrig-organische oder organische Lösungen oder Suspensionen, vorzugsweise als wässrige Lösungen oder Suspensionen dem Mikrojetreaktor zugeführt werden.

11. Verfahren nach mindestens einem der Ansprüche 1 bis 10, **dadurch gekennzeichnet, dass** vor, während oder nach der Azokupplungsreaktion im Mikrojetreaktor 0 bis 40 Gew.-%, bevorzugt 1 bis 30 Gew.-%, bezogen auf das Azofarbmittel, eines oder mehrerer Hilfsmittel aus der Gruppe der Tenside, nichtpigmentären und pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren zugegeben werden.

12. Verfahren nach mindestens einem der Ansprüche 1 bis 11, **dadurch gekennzeichnet, dass** vor den Einspritzdüsen der Kupplungskomponente und/oder dem Diazoniumsalz eine Pufferlösung zugegeben wird oder dass durch Einspritzen mittels eines separaten Strahls in den Kollisionspunkt eine Pufferlösung zugeführt wird.

13. Verfahren nach mindestens einem der Ansprüche 1 bis 12, **dadurch gekennzeichnet, dass** der Kollisionspunkt der Strahlen in einem materialfernen Bereich des Reaktorraums liegt.

14. Verfahren nach mindestens einem der Ansprüche 1 bis 13, **dadurch gekennzeichnet, dass** die Lösung oder Suspension des Diazoniumsalzes durch 1, 2 oder mehrere Düsen, bevorzugt durch eine Düse, und unabhängig davon die Lösung oder Suspension der Kupplungskomponente durch 1, 2 oder mehrere Düsen, bevorzugt durch 1, 2 oder 3 Düsen, auf einen gemeinsamen Kollisionspunkt gespritzt werden.

15. Verfahren nach mindestens einem der Ansprüche 1 bis 14, **dadurch gekennzeichnet, dass** der Düsendurchmesser der Düse, durch die das Diazoniumsalz gespritzt wird, das 0,2-fache bis 5-fache, bevorzugt das 0,3-fache bis 3-fache, des Durchmessers der Düse beträgt, durch die die Kupplungskomonente gespritzt wird.
